# EUROPEAN PATENT APPLICATION

(11) **EP 2 025 525 A1**
(43) Date of publication of application: **18.02.2009**
(21) Application number: 08162276.3
(22) Date of filing: 13.08.2008
(51) Int. Cl.: B41M 3/14, G03G 21/04, C09K 11/88

(54) **Quantum Dot-Based Luminescent Marking Material**

(30) Priority: 13.08.2007 US 837585
(71) Applicant: Xerox Corporation, Rochester, New York 14644 (US)
(72) Inventor: Wosnick, Jordan, Toronto Ontario M4S 2P5 (CA); Vanbesien, Daryl W., Burlington Ontario L7L 6L6 (CA); Iftime, Gabriel, Mississauga Ontario L5N 4T1 (CA)
(74) Representative: Grünecker, Kinkeldey, Stockmair & Schwanhäusser Anwaltssozietät

(57) **Abstract**

A luminescent marking material includes a luminescent material, which includes quantum dots, and a vehicle for delivering the luminescent material to an object. A method of embedding information on a substrate includes assigning information to luminescent material, which includes quantum dots, forming luminescent marking material by combining luminescent material and marking material, and creating an image on a substrate with the luminescent marking material. A system that embeds and recovers information on a substrate includes an image forming device containing such a luminescent marking material for forming an image on the a substrate and a document reading device including a radiation emitting unit, which emits radiation that causes the luminescent marking material to illuminate, and a reader that detects the data on the substrate while the luminescent marking material is illuminated.

## Description

### TECHNICAL FIELD

Described herein is a luminescent marking material, a method for embedding readable information on an object, and a method for reading the embedded information with a device. The information can be integrated into an image that uses different colors and/or shapes to encode information or in other forms of imaging such as, for example, text, pictures, glyphs, and dots. The information may be formed using luminescent marking materials such as toner compositions that include quantum nanoparticle-sized materials or quantum dots.

For example, described is a process for printing machine readable information with luminescent marking materials that can, by irradiation with radiation of an appropriate wavelength, be made to illuminate to either be rendered visible or to be rendered to have a different color or appearance from the marking material in ambient light, in a reversible process. Also described are information embedding image systems comprised of dots or glyphs illuminating with different colors, substrates having information embedded thereon using the luminescent marking materials, and methods for imprinting and reading the embedded information.

A number of advantages are associated with the various embodiments described herein. For example, where the luminescent materials are colorless in normal room light (ambient light) conditions, the machine readable or encrypted information is invisible. The information is thus hidden until exposed to radiation such as UV light that causes the luminescent materials to illuminate. Another advantage is that the information cannot be copied with existing photocopiers. A further advantage is that where dots are used to encrypt the information, the amount of information that can be encrypted increases significantly because the number of dots that may be printed on the same page is much higher when compared with glyphs, and the size of the dots may be significantly decreased by using an emissive (luminescent) technology rather than a reflective technology.

### BACKGROUND

U.S. Patent Publication No. 2004/0220298 describes an ink composition suitable for ink jet printing comprising a fluorescent compound, a solvent, and an energy active compound, and optionally a non- fluorescent colorant. The energy active compound, when exposed to energy, generates one or more active species that can react with the fluorescent compound to alter one or more of the characteristics of the fluorescent compound. The fluorescent compound can be colored or colorless. Further disclosed is a jet ink composition suitable for printing on substrates authentication or security marks which can be rendered unreadable. The fluorescence of the mark is quenched and the visible color is changed when irradiated with a light.

U.S. Patent Publication No. 2004/0233465 describes an article marked with image indicia for authentication, information, or decoration by providing a plurality of inks having a plurality of fluorescence colors when exposed to excitation energy, separating colors of the image indicia into a plurality of image levels in accordance with the fluorescence colors of the inks, and printing each image level in mutual registration on the article using the corresponding ink. The image printed with each ink may be substantially invisible under fluorescence within the visible spectrum. The invisibly printed images have multiple authentication features, including the use of covert UV- fluorescent materials, IR-fluorophores, microparticles, and other chemical taggants.

U.S. Patent No. 5,807,625 describes photochromic printing inks that are used for the printing of security documents. Prints are normally nearly colorless and become colored when energy irradiated, such as by ultraviolet light. This photocoloration is reversible. The printing inks contain photochromic compounds which are protected against other ink components. Methods are described to prepare the inks, to print security documents, and to detect counterfeiting.

While known compositions and processes are suitable for their intended purposes, a need remains for additional systems and processes for embedding and recovering machine readable authentication information on an object. Further, there is a need for systems and processes which enable the placement of encoded information on documents which is not detectable to a human viewer but which is machine readable. Additionally, there is a need for systems of encoding machine readable information so that larger amounts of such information may be stored, and thus where the amount of overdetermination built into the stored information may be increased.

### SUMMARY

These and other objects may be achieved herein by providing a luminescent marking material which comprises a luminescent material and a vehicle that delivers the luminescent material to an object, wherein the luminescent material comprises semiconducting nanoparticles (quantum dots). In embodiments, the marking material is a toner composition, and the vehicle is a toner particle where the quantum dots are incorporated into the toner particles.

Marking materials that are colored or colorless are provided. For example, provided is a set of marking materials comprised of cyan, magenta, yellow, and black colored inks or toners, where the quantum dots are incorporated into one or more of the toner compositions. Also provided is a clear toner composition where the quantum dots are incorporated into clear toner composition.

The quantum dots have an average particle size less than about 50 nm such as from about 3 to about 15 nm.

Marking materials comprising two or more luminescent marking materials, wherein each luminescent marking material, when exposed to activating radiation, has a narrow emission band of visible light that is used to create a unique indicator or "barcode" are provided.

Also provided is a method of embedding information on a substrate, comprising assigning information to luminescent material; forming luminescent marking material by combining the luminescent material into marking material; creating an image on a substrate with the luminescent marking material, wherein the luminescent material comprises quantum dots.
In a further embodiment the at least one luminescent material is two or more luminescent materials, and emitted or reflected light wavelengths are created by varying the type, number, and concentration of the luminescent materials in the luminescent marking materials, and the light wavelength emitted or reflected by each of the two or more luminescent materials is at least machine differentiable from the light wavelength emitted or reflected by the other luminescent materials of the two or more luminescent materials.
In a further embodiment the at least one luminescent marking material comprises colorant.
In a further embodiment the at least one luminescent marking material is from 1 to 4 luminescent marking materials, wherein the 1 to 4 marking materials comprise cyan, magenta, yellow, and black toners or inks or a combination thereof.
In a further embodiment emitted or reflected light wavelength combinations are created by varying the type, number, and concentration of luminescent materials in each of the 1 to 4 luminescent marking materials.
In a further embodiment the at least one luminescent marking material comprises no colorant.

Still further provided is a system of reading and authenticating documents including: an image forming device containing luminescent marking material, wherein the image forming device receives data representative of the readable information, and forms an image corresponding to the data with the luminescent marking material on an image receiving substrate; and a document reading device including a radiation emitting unit that emits radiation effecting luminescence of the luminescent marking material, and a reader that detects the data in the image on the image receiving substrate while the luminescent marking material is illuminated.

### BRIEF DESCRIPTION OF DRAWINGS

The Fig. is an example of customized luminescent "barcodes" corresponding to particular Pantone colors.

### EMBODIMENTS

In embodiments, provided is a luminescent marking material comprising luminescent material and a vehicle for delivering the luminescent material to an object, wherein the luminescent material comprises quantum dots. The quantum dots having an average particle size from about 2 to about 50 nm. The marking material may have any suitable form, for example, solid or liquid form, and may comprise, for example, a liquid ink, a solid ink, a toner, and the like.

The luminescent quantum dots may illuminate via any suitable route. Desirably the luminescent quantum dots will illuminate as a result of being exposed to activating radiation such as, for example, ultraviolet (UV) light. Luminescence refers to the emission or reflection of any wavelength of light visible by the unaided eye or a machine, such as, for example, a spectrophotometer or spectrofluorimeter, when exposed to activating radiation, and thus luminescence is intended to cover any intensity of emitted or reflected visible light or machine detectable light.

The information format will first be discussed. Any suitable or desired readable information format may be selected and introduced into any readable image including text, pictures, symbols, and the like. Machine readable images, such as one-dimensional symbologies, such as bar codes, two-dimensional symbologies such as stacked bar codes, matrix codes, codes such as PDF417 and the like are also suitable. "Image" is meant to include any form of marking or plurality of markings visible or invisible to the unaided eye. Therefore, "image" includes markings made by marking materials that contain no colorant or pigment other than the quantum dot and are only visible, if at all, when exposed to activating radiation.

In embodiments, quantum dots are incorporated into toner, ink, or the like, alongside conventional pigments that will allow the printing of ordinary text and images that appear normal under visible light, but illuminate at a customized set of wavelengths upon exposure to activating radiation, such as, for example, UV light. Because quantum dots emit narrow-banded wavelengths of light that are roughly proportional to the particle size of the quantum dot, highly customizable sets of wavelengths can be distributed to each customer, which allows the printing of highly authenticated documents without using encrypted codes such as glyphs, dots, or the like.

For example, selecting three out of an available eight quantum dots for incorporation into a cyan toner would provide 56 possible luminescence wavelength combinations. This range of available possible combinations can be increased, for example, as available quantum dots are developed, as emission wavelengths are adjusted, and the like. All text or images printed using this cyan toner would then bear the luminescent "barcode" unique (out of 56 possibilities) to that cyan toner, so that, for example, authentication of a document printed with this toner could be established without the need to print additional security encryptions, such as glyphs or dots. Each wavelength combination is detectably different from the others, thus the document is able to be authenticated, through the use of a machine such as, for example, a spectrophotometer.

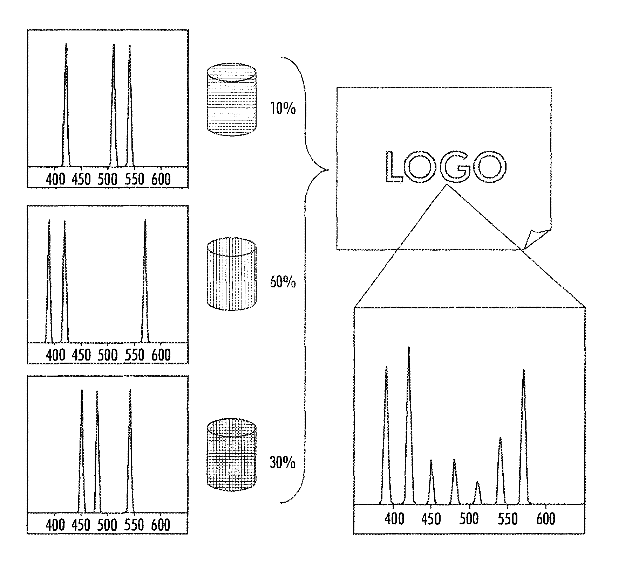

Further, as shown in the figure, if quantum dots are incorporated into magenta and yellow toners, the number of custom combinations increases to 175,616 (56³) combinations. Using various combinations of cyan, magenta, and yellow toners in a color image allows for a near infinite array of unique "barcodes" encoded by both luminescent emission wavelength as well as luminescent intensity, as determined by the ratio of the primary colors used.

For example, as shown in the figure, for a company printing its logo using a particular Pantone color: if each primary Pantone color (such as cyan (100), magenta (110), and yellow (120)) is infused with at least one set of quantum dots, the combination (both in number and concentration) of primary Pantone colors required to generate the desired Pantone color of the company's logo would create a unique luminescent "barcode" (130) specific to the Pantone color itself and detectable by the use of a device, such as spectrofluorimeter or sets of filters and the like.

In embodiments, quantum dots can also or alternatively be added to colorless marking materials, wherein the resulting image would be invisible in ambient light, but would illuminate when exposed to activating radiation, such as, for example, UV light. The image could be ordinary text or encrypted information, such as glyphs, dots and the like.

In embodiments, information is embedded on a substrate using at least one marking material, wherein each of the at least one marking materials comprises two or more sets of quantum dots wherein, the size of the quantum dots in the each set of quantum dots differs from the size of the quantum dots in the other sets of quantum dots so that the wavelength of light emitted or reflected by the each set of quantum dots is machine differentiable from the wavelength of light emitted or reflected from the other sets of quantum dots upon exposure to activating radiation.

Thereby, for example, a single marking material, such as an ink, toner or the like, containing at least two sets of quantum dots embedded on a substrate can emit or reflect at least two machine-differentiable wavelengths of light upon exposure to activating radiation. These customizable wavelength combinations can be assigned to customers and used as unique identifiers used for authentication, encoding information, and the like. The information can be read by any reader that is capable of detecting the difference in the light wavelengths such as a spectrophotometer, for example. Any reader capable of detecting different light wavelengths and intensities based on absorption, emission or reflection spectroscopy may be used. The wavelengths read by the reader can then be compared with the customized wavelengths assigned to customers to authenticate the image, code, or the like.

In embodiments, information is embedded on a substrate using two or more luminescent marking materials, wherein each of the luminescent marking materials comprises at least one luminescent material. Further, the light wavelength emitted from the luminescent material in each of the two or more luminescent marking materials differs from the light wavelengths emitted from the luminescent material in the other two or more luminescent marking materials so that the wavelength of light emitted by one luminescent marking material of the two or more luminescent marking materials is machine differentiable from the wavelengths emitted or reflected by the other luminescent marking materials of the two or more luminescent marking materials.

Thereby, a combination of luminescent marking materials such as, for example, cyan, magenta, yellow, and black toners can be used to create customizable light wavelength combinations upon exposure to activating radiation. These customizable light wavelength combinations can be assigned to customers and used as unique identifiers for authentication or encoding of information and the like. The authentication information can be read by any reader that is capable of detecting the difference in the light wavelengths such as a spectrophotometer, for example. Any reader capable of detecting different light wavelengths and intensities based on absorption, emission or reflection spectroscopy may be used. The wavelengths read by the reader can then be compared with the customized wavelengths assigned to customers to authenticate the image, code, or the like.

In embodiments, the image format is comprised of a self-clocking glyph code as disclosed in, for example, U.S. Patents Nos. 5,128,525 and 5,168,147, the disclosures of each of which are totally incorporated herein by reference. In one embodiment, this code comprises printed glyphs which represent 0 and 1 bits in a document encoding scheme. The glyphs are printed at a substantially uniform distance from each other, so that the center of each glyph is a substantially uniform distance from the center of adjacent glyph(s). The visual appearance of the marks, to the naked eye, may appear as a textured grayish area. These marks can be printed at very high densities of, for example, about 3,600 data bits per square inch or higher, and scanned with a 300 pixel per inch scanner. Data is encoded by the shape or the rotational orientation of the mark. Clocking can be taken from the data itself, without synchronization marks external to the data. By placing a mark at each data bit position, it is easier to synchronize the reading process of the data without the use of registration marks. The number of bits that can be represented by each symbol is related to the total number of symbols in the code; when the number of bits to be represented by a symbol is "n", the total number of glyphs possible in the code is 2ⁿ distinctive glyphs. For example, in a code wherein two distinct glyphs are possible, such as / and \, each symbol may represent one bit; for example, / = 1 and \ = 0. In a code wherein four distinct glyphs are possible, such as /, -, \, and |, each symbol can represent two bits; for example, / = 00, | = 01, \ = 10, and - = 11. In a code wherein eight distinct glyphs are possible, each symbol can represent three bits, and the like. Data can be encoded in the shape of the glyphs, the rotation of the glyphs, or in any other desired variation.

In embodiments, the glyphs are elliptical marks, and in a simple code wherein two distinct shapes are possible, the glyphs are, for example, elliptical marks rotated from the vertical at either about +45° (for example, "/") or -45° (for example "\"). The use of orthogonally-oriented marks potentially allows for a large degree of discrimination between data bit 1 and data bit 0. The marks may be inclined at about 45°, rather than being horizontal or vertical, because (a) there is less tendency for adjacent marks to touch, (b) the eye is less sensitive to diagonal lines than to vertical or horizontal lines, and (c) printing and scanning non-uniformities tend to be horizontal (banding) or vertical (photodetector array response variations). In an embodiment, the two glyphs may each be elongated multi-pixel symbols having the same number of adjacent "ON" pixels and differ from each other in their rotation from the vertical. These specific glyphs are readily discernible from each other, even in the presence of significant distortion and image degradation, because they do not tend to degrade into a common shape. In addition, since all of the glyphs have the same number of "ON" pixels, the printed glyph code has a generally uniform texture, which will take the form of a gray scale appearance when higher density glyphs are viewed by a casual observer.

In embodiments, the image is comprised of at least two differently colored marks. The marks may be the same or different in shape. The different colors are capable of being separately detected by a reader such as a spectrophotometer. Any reader capable of detecting different colors based on absorption, emission or reflection spectroscopy may be used. The reader understands the different colors as representing different data, for example understanding 0s as one emitted color (for example red) and 1s as another emitted color (for example blue), which allows the image to encrypt binary code. Any two or more distinguishable colors may be used, for example at least red and blue, at least red and green, at least green and blue, and the like. The different colors may also be different shades of a same color, including similar colors exhibiting a distinguishable appearance due to different luminescence upon exposure to radiation, for example a different brightness.

The marks may be glyphs, as discussed above, or dots and the like. Dots refer to, for example, any mark of any shape, and includes, for example, circular or rectangular marks.

With dots, 0s and 1s are provided by dots that exhibit and/or emit different colors under the conditions under which the reading occurs. For example, two differently colored marking materials visible under ambient light conditions may be used. Further, luminescent marking materials that are either visible or invisible under ambient light but that emit two different colors upon exposure to radiation such as UV light may also be used.

An advantage of the use of colored marks such as colored dots is that with conventional glyphs, the amount of encrypted information is limited by the size of the glyphs. Glyphs typically occupy a square on the surface of a substrate. If the same square was to be occupied by colored dots that have a diameter about equal to the width of the glyphs, which would require no need to change the resolution in forming the image, at least four or five dots may be included in the same space occupied by the glyph. Compared to glyphs formed on a substrate using a same device, the number of bits of information may be increased by at least four times without increasing the resolution of the device forming the image on the substrate. As a result, the amount of information is increased significantly in a document made using colored dots instead of glyphs. Additional gains in information capability may be realized by making the dots even smaller. The dots may be of a size ranging from about 0.1 microns to about 1,000 microns, for example from about 10 microns to about 100 microns and from about 40 microns to about 100 microns.

The glyphs and dots can contain more information if they are printed using luminescent marking materials comprising quantum dots. Using luminescent marking materials comprising two or more sets of quantum dots allows each glyph or dot to be more customizable and therefore contain more information. For example, a dot printed with a luminescent marking material containing three sets of quantum dots, each set of quantum dots emitting or reflecting a different wavelength of light upon exposure to activating radiation, is distinguishable from another dot containing at least one differing set of quantum dots, leading to nearly infinite possibilities of distinguishable dots. In this way an additional layer of information is added to each dot when information is assigned to the unique wavelength combinations.

The glyphs and dots can be decoded by any suitable or desired method. For example, for glyphs, bitmap images of the glyphs can be processed even when image distortion or degradation has occurred by, for example, facsimile transmission, scanning of photocopies, or the like. In certain decoders, the image processing which is performed for decoding the glyph codes first locates the glyphs in the X-Y coordinates of the bitmap image space, then constructs a table for indexing the glyphs in the spatial order in which data was encoded in them, and then analyzes the glyphs in indexed order for sequentially extracting the data values encoded therein. In other decoders, the image processing classifies the glyphs by their shapes while concurrently locating their centers in the bitmap image space, so the decoded values of the glyphs conveniently are indexed to the bitmap image space. These spatially indexed decoded data values may be sorted in accordance with the spatial template or pattern that governs their spatial ordering if it is desired to restore their serial order in the time domain. Similar methods may be used with dots, with the decoding being based on the different color detection rather than solely on glyph orientation.

The encrypted information, whether glyphs, dots, unique combinations of light wavelengths emitted or reflected by luminescent materials, or the like may be printed onto another image, or may be printed onto a blank portion of a substrate free of other images. In embodiments where luminescent marking materials are used to form the encrypted information, and in particular, colorless luminescent marking materials are used to form the encrypted information, the encrypted information may be located exclusively on an image portion of the substrate. For example, where the image is comprised of text, the encrypted information may be overprinted onto the letters of the text. This way, the encrypted information will be completely hidden from a viewer in normal room light (with no chance of potentially visible traces of colorless ink being noticed in non-image areas, for example due to differential gloss or darkening of the substrate by the ink), and would be apparent only under radiation such as UV light that causes luminescence of the luminescent material.

The marking materials for forming the images will now be described.

In embodiments, the images are formed using a luminescent marking material. The luminescent marking material may either be made to not contain any visible colorant so as to be a colorless marking material in normal room/ambient light conditions, or it may include visible colorants wherein upon luminescence a visible change in appearance, for example in color or brightness, occurs. An advantage in forming the encrypted information with colorless luminescent marking materials is that the information can be made to be invisible in ambient light, and becomes visible and machine readable only upon exposure to radiation such as UV light at which the luminescent marking material illuminates. In this way, persons other than those authorized are likely to be unaware of the presence of the encrypted information therein, which could thus be a valuable tool in preventing or detecting counterfeiting.
Another advantage is that the encrypted information may be made to have an appearance other than gray as with conventional encrypted information. A still further advantage is that the encrypted information cannot be copied with existing photocopiers that are not capable of reproducing the luminescent property.

In embodiments, a single luminescent marking material may be used to form the images. The single luminescent marking material may contain substantially no colorant so as to be substantially not visible on the substrate under normal ambient light, but contain at least one luminescent material so that upon exposure to radiation effecting luminescence of the at least one luminescent material, the luminescent marking material exhibits a visible color. In this way, the encrypted image only appears upon exposure to radiation that causes luminescence of the luminescent material, which luminescence can be detected by the reader. It is also acceptable to employ a luminescent marking material that includes a colorant in addition to the luminescent material.

In embodiments, at least one luminescent marking material may contain two or more luminescent materials, wherein the light wavelength emitted or reflected by one luminescent material of the two or more luminescent materials in the at least one marking material is at least machine differentiable from the light wavelength emitted or reflected by the other luminescent materials of the two or more luminescent materials in the at least one luminescent marking material upon exposure to activating radiation. Thereby, the light wavelengths emitted or reflected by the at least one marking material is highly customizable, and the customized light wavelengths can be assigned to customers as unique identifiers for use in information authentication, encoding, and the like.

When the images are formed using luminescent marking materials, the reader is equipped with a radiation source such as a UV light source that will cause luminescence of the luminescent marking material. The reader can then detect and read the information. In this regard, the encryption and reading is based on the use of an emissive technology, namely the luminescent marking materials, rather than on reflective technology as when conventional marking materials are used.

In further embodiments, the at least one luminescent marking material is comprised of at least two luminescent marking materials, a first luminescent marking material containing a first luminescent material so that upon exposure to radiation effecting luminescence of the first luminescent material, the first luminescent marking material exhibits a first visible color, and a second luminescent marking material containing a second luminescent material so that upon exposure to radiation effecting luminescence of the second luminescent material, the second luminescent marking material exhibits a second visible color different from the first visible color. The first and second luminescent materials desirably illuminate upon exposure to a same radiation, although such is not required.

In embodiments, the at least two different luminescent marking materials emit different colors that can be differentially detected by a reader such as a spectrometer, for example. The image format can thus encrypt binary code via use of the differently emitting colors.

Additional advantages associated with the use of at least two different luminescent marking materials that exhibit a different appearance upon luminescence, for example such as a different color or a different brightness, include the ability to form invisible glyphs, and thus formation of an image with a nicer appearance when compared with gray areas obtained with conventional glyphs.

A further advantage associated with using at least two different color emitting glyphs or quantum dots formed using luminescent marking materials is that the dots and/or glyphs cannot be photocopied with conventional photocopiers, as discussed above.

By employing at least two different luminescent marking materials, whether a colorant is included in one or both of the luminescent marking materials or not, an advantage is that the capacity for encrypting and storing information can be significantly increased. For example, glyphs formed with two different color emitting luminescent marking materials permits the use of two mechanisms for encryption. First is the glyph orientation (for example, left or right) discussed above. Second is the two different colors of the glyphs, as described above. This provides for four different states that may be used as a mechanism of encrypting more information on the same surface of a substrate. With conventional one-color glyphs, one uses only the first mechanism (glyphs orientation), which provides only two states.

Moreover, when using differently colored or different color emitting glyphs or dots to store information, a significant increase of the amount of information which may be encrypted may be realized. This is beneficial not only with respect to the amount of information that may be stored, but also with respect to recovering the information in damaged documents. That is, in recovering information from damaged documents, there is a significantly higher proportion of the document that can be recovered when compared with current encryption technology, for example because dots and/or glyphs overall permit a larger amount of information to be stored via encryption, and thus the amount of duplicate information (overprotection) written into the document can be increased compared with conventional one-color glyphs. For example, there is a tradeoff between how much data is stored and the amount of overdetermination that is built into the stored data. At present, the overdetermination of data is typically set at about 10%, and data recovery may fail if more than about 10% of the document is damaged. This is due to the fact that only a limited amount of information can be encrypted with current one-color and non-emissive glyphs. Using differently colored or different color emitting glyphs or dots, whether permanently colored or invisible luminescent, increases the amount of encrypted information, which allows for recovering data that is damaged to a larger percent than 10%. This percentage is greater when using dots as compared to glyphs, again due to the fact that more dots may be contained in the same space occupied by glyphs, at the same resolution.

When images are printed with conventional marking materials, at least a portion of the printed document is permanently printed with what appears to be a relatively uniformly-textured gray scale image. When large amounts of encrypted information are present, an entire printed document may be covered with encrypted information that form a background upon which an image or information intended to be read by the naked eye is formed. The use of luminescent marking materials in embodiments herein enables the generation of images in patterns that are capable of being rendered visible or invisible by effecting a change, such as by irradiation of part or all of the encrypted information with radiation of a wavelength that effects luminescence in the luminescent marking materials used to form the image. Thus, the image pattern or carpet may be rendered invisible unless or until needed for machine reading, thereby further improving the appearance of the document.

When forming text, images, or code, included glyphs or dots, any conventional marking materials, inclusive of inks and toners, may be used. Examples of suitable marking materials include inks, including lithographic and flexographic inks, aqueous inks, including those suitable for use with inkjet printing processes, liquid and dry toner materials suitable for use in electrostatic imaging processes, solid hot melt inks, including those suitable for use with ink jet printing processes, and the like. Such conventional marking materials typically comprise at least a vehicle with a colorant such as pigment, dye, mixtures of pigments, mixtures of dyes, or mixtures of pigments and dyes, therein. The (non-luminescent) colorant may be present in a colored marking material in any desired amount, for example from about 0.5% to about 90% % by weight of the marking material, for example from about 1% to about 75% or from about 1 to about 50 %, by weight of the marking material.

Colorants include pigment, dye, mixtures of pigment and dye, mixtures of pigments, mixtures of dyes, and the like.

As colorants, examples may include any dye or pigment capable of being dispersed or dissolved in the vehicle. Examples of suitable pigments include, for example, PALIOGEN Violet 5100 (BASF); PALIOGEN Violet 5890 (BASF); HELIOGEN Green L8730 (BASF); LITHOL Scarlet D3700 (BASF); SUNFAST^{®} Blue 15:4 (Sun Chemical 249-0592); HOSTAPERM Blue B2G-D (Clariant); Permanent Red P-F7RK; HOSTAPERM Violet BL (Clariant); LITHOL Scarlet 4440 (BASF); Bon Red C (Dominion Color Company); ORACET Pink RF (Ciba); PALIOGEN Red 3871 K (BASF); SUNFAST^{®} Blue 15:3 (Sun Chemical 249-1284); PALIOGEN Red 3340 (BASF); SUNFAST^{®} Carbazole Violet 23 (Sun Chemical 246-1670); LITHOL Fast Scarlet L4300 (BASF); Sunbrite Yellow 17 (Sun Chemical 275-0023); HELIOGEN Blue L6900, L7020 (BASF); Sunbrite Yellow 74 (Sun Chemical 272-0558); SPECTRA PAC^{®} C Orange 16 (Sun Chemical 276-3016); HELIOGEN Blue K6902, K6910 (BASF); SUNFAST^{®} Magenta 122 (Sun Chemical 228-0013); HELIOGEN Blue D6840, D7080 (BASF); Sudan Blue OS (BASF); NEOPEN Blue FF4012 (BASF); PV Fast Blue B2GO1 (Clariant); IRGALITE Blue BCA (Ciba); PALIOGEN Blue 6470 (BASF); Sudan Orange G (Aldrich); Sudan Orange 220 (BASF); PALIOGEN Orange 3040 (BASF); PALIOGEN Yellow 152, 1560 (BASF); LITHOL Fast Yellow 0991 K (BASF); PALIOTOL Yellow 1840 (BASF); NOVOPERM Yellow FGL (Clariant); Lumogen Yellow D0790 (BASF); Suco-Yellow L1250 (BASF); Suco-Yellow D1355 (BASF); Suco Fast Yellow D1 355, D1 351 (BASF); HOSTAPERM Pink E 02 (Clariant); Hansa Brilliant Yellow 5GX03 (Clariant); Permanent Yellow GRL 02 (Clariant); Permanent Rubine L6B 05 (Clariant); FANAL Pink D4830 (BASF); CINQUASIA Magenta (DU PONT), PALIOGEN Black L0084 (BASF); Pigment Black K801 (BASF); and carbon blacks such as REGAL 330™ (Cabot), Carbon Black 5250, Carbon Black 5750 (Columbia Chemical), mixtures thereof and the like. Examples of suitable dyes include Usharect Blue 86 (Direct Blue 86), available from Ushanti Color; Intralite Turquoise 8GL (Direct Blue 86), available from Classic Dyestuffs; Chemictive Brilliant Red 7BH (Reactive Red 4), available from Chemiequip; Levafix Black EB, available from Bayer; Reactron Red H8B (Reactive Red 31), available from Atlas Dye-Chem; D&C Red #28 (Acid Red 92), available from Warner-Jenkinson; Direct Brilliant Pink B, available from Global Colors; Acid Tartrazine, available from Metrochem Industries; Cartasol Yellow 6GF Clariant; Carta Blue 2GL, available from Clariant; and the like. Example solvent dyes include spirit soluble dyes such as Neozapon Red 492 (BASF); Orasol Red G (Ciba); Direct Brilliant Pink B (Global Colors); Aizen Spilon Red C-BH (Hodogaya Chemical); Kayanol Red 3BL (Nippon Kayaku); Spirit Fast Yellow 3G; Aizen Spilon Yellow C-GNH (Hodogaya Chemical); Cartasol Brilliant Yellow 4GF (Clariant); Pergasol Yellow CGP (Ciba); Orasol Black RLP (Ciba); Savinyl Black RLS (Clariant); Morfast Black Conc. A (Rohm and Haas); Orasol Blue GN (Ciba); Savinyl Blue GLS (Sandoz); Luxol Fast Blue MBSN (Pylam); Sevron Blue 5GMF (Classic Dyestuffs); Basacid Blue 750 (BASF), Neozapon Black X51 [C.I. Solvent Black, C.I. 12195] (BASF), Sudan Blue 670 [C.I. 61554] (BASF), Sudan Yellow 146 [C.I. 12700] (BASF), Sudan Red 462 [C.I. 260501] (BASF), mixtures thereof and the like.

In embodiments, the image is formed using at least one luminescent marking material. The luminescent marking material may comprise any material suitable for generating images on a selected substrate and containing a luminescent material. Examples of suitable luminescent marking materials include inks, including lithographic and flexographic inks, aqueous inks, including those suitable for use with ink jet printing processes, liquid and dry toner materials suitable for use in electrostatic imaging processes, solid hot melt inks, including those suitable for use with ink jet printing processes, and the like

The luminescent marking materials typically comprise at least a marking material vehicle with at least one set of quantum dots, comprising quantum dots of the same or different size within a given set. The quantum dots may be present in the luminescent marking material in any desired amount, and desirably present in a number or concentration effective to impart a desired color and intensity under the appropriate radiation (for example, UV light) conditions. For example, the quantum dots are present in the marking material in an amount of from about 0.001 to about 20 % by weight, such as from about 0.01 to about 20% by weight or from about 0.1 to about 10% by weight, of the luminescent marking material.

Quantum dot materials are luminescent inorganic semiconductor nanoparticle materials. The light emission of quantum dots is due to quantum confinement of electrons and holes. An advantage of quantum dots is that they can be tuned so that they emit any desired wavelength (color) as a function of their size, by using one material only and the same synthetic process. For example, in a nanoparticle size range of from about 2 to about 10 nm, one can obtain a full range of colors from the visible range of the spectrum. In addition, quantum dots possess improved fatigue resistance when compared with organic dyes. Another advantage of quantum dots is their narrow emission bands, which increases the number of possible wavelength choices for designing customized colors. Due to their small size, typically less than about 50 nm, such as less than about 20 nm, or less than about 15, marking materials containing the nanoparticles can be easily jetted. Quantum nanoparticles are available from a variety of companies, such as from Evident Technologies.

In embodiments, the quantum dots used herein are functionalized quantum dots. Surface functionalized quantum dots may have better compatibility with the vehicles of the marking materials. Suitable functional groups present on the surface of the dots for compatibility with marking material vehicles may include long linear or branched alkyl groups, for example from about 1 carbon atom to about 50 carbon atoms in length, such as from about 3 carbon atoms to about 30 carbon atoms or from about 10 carbon atoms to about 20 carbon atoms. Other suitable compatibilizing groups include polyesters, polyethers, polyamides, polycarbonates and the like.

The luminescent marking materials may also optionally comprise any of the colorants, in the amounts, described above. Further, the luminescent marking materials may also include a wax and/or other conventional additives such as flow aids, charge additives, drying aids, and the like.

When the luminescent material is included in a colored marking material, the luminescent material should noticeably alter the appearance of the printed image upon exposure to activating radiation. In ambient light, the printed image will exhibit the intended color of the colorant in the colored marking material. However, upon exposure to the radiation, luminescence of the luminescent material in the marking material visibly changes the appearance of the printed image. For example, a yellow luminescent marking material exhibits the intended yellow color in ambient light, but upon exposure to activating radiation, the luminescence of the luminescent material may change the color exhibited to a different color, for example to a red or blue color.

The above feature can be beneficial in making it difficult for encrypted information to be decoded by unauthorized persons. For example, non-luminescing 'dummy' image symbols may be interspersed into the printed image. Because these symbols would not illuminate during reading, the reader would not see these symbols. Instead, the reader would read only the luminescing symbols, and thus would correctly decode the encrypted information. Someone trying to decode the information based on reading the printed symbols in ambient light conditions would not be able to correctly decode the encrypted information. Moreover, someone copying the document and/or image would also not be able to reproduce the image correctly, as the person would not know that only certain ones of the image are made to illuminate when exposed to activating radiation.

When the luminescent material is included in a marking material that does not include a colorant therein, the printed image is not visible or apparent to a viewer in ambient light. Upon exposure to radiation, the luminescence of the luminescent material causes the ink to become visible. Again, advantages of including a luminescent material in a substantially colorless marking material include being able to form an image that is invisible in ambient light, but which can be made to appear upon exposure to activating radiation. The image thus will not be capable of being photocopied. This is because the luminescent material does not illuminate under existing copying conditions, and thus will not appear in a copy. Moreover, the copier will not contain any marking material with luminescent material, so that the copy will not illuminate at all. Such a feature is advantageous in that authentication is possible because falsified copies cannot be made to include the luminescent property. Also, this feature permits one to intentionally embed hidden information in documents, which information is only revealed to one knowing to expose the document to activating radiation.

Luminescent, or luminescent marking material, refers to, for example, the capability of a material to illuminate upon exposure to an activating radiation, for example a radiation having a wavelength from about 10 nm to about 800 nm, such as from about 150 nm to about 400 nm (the UV light range) or from about 180 nm to about 380 nm. The activating radiation may thus be in the ultraviolet (UV), visible or infrared regions, although the use of activating radiation in the UV region (from about 180 nm to about 400 nm) is most common. The luminescence may occur instantaneously on exposure to the activating radiation, or may occur after overcoming any activation phase. The luminescence exhibited by the luminescent ink is reversible, but should last for a time period permitting the color change or image appearance change to be detected, for example a time frame of from about 1 nanoseconds to about 1 hour, such as from about 100 microseconds to about 30 minutes or from about 10 microseconds to about 5 minutes.

Suitable semiconducting nanoparticles (quantum dots) include, for example, CdS, CdSe, PbS, InP, CdTe, PbSe, PbTe, GaAs and related compounds.

An advantage in using quantum dots as the luminescent material is that the encrypted image s can be readily customized for different users. As was discussed above, the use of image comprised of at least two differently colored or different color emitting marking materials represents a way of storing and hiding information in an electronic binary format and that cannot be copied or read (they are invisible to human eye) except by the intended user and the appropriate electronic reader. If the same encrypted technology is provided to all customers, the result would be that any customer possessing the same protective technology can read a document protected by another customer. This is unacceptable from a security-printing point of view. Customization of such image is possible by providing a different encoding/decoding and image -scrambling key for each customer, which is a software solution. This may work well, but like with any software, given enough time it can be counterfeited. Additional protection is needed particularly to protect sensitive important documents. The use of quantum nanoparticles as the luminescent material provides a materials solution for providing customized images and documents without the need for changing the key.

Thus, customized encrypted documents are provided by changing the color of the emitted light in the image for different users. Different users thus may have different color sets for their customized image, and their electronic readers are set to detect only their particular set of colors (wavelengths). As a result, even if a document falls into the wrong hands, it cannot be read or authenticated by that unauthorized user because that user would not have the necessary tuned reader to detect and read the emitted colors. Because the quantum dots typically have very narrow emission spectra, customization is possible for a large number of customers. In this way, there is no need for a change of the encryption key. However, when using the materials and software customizations together, the result can be a protection method that is virtually impossible to counterfeit since it has several layers of protection.

The materials solution to the protection method requires the capability of tuning the emitted colors of the luminescent components over the entire spectrum. With quantum dots it is possible to tune to any color by changing the quantum dot size, without changing the synthetic process or the materials. Any color in the visible spectrum can be achieved by varying the quantum dot size from about 1 nm to about 50 nm, or from about 1 nm to about 20 nm, or from about 2 nm to about 10 nm.

The marking materials comprising quantum dots may be made to have very specific emission spectra. For example, the marking material may be made to have an emission range having a narrow full width half max emission range peak of about 30 nm or less, such as about 25 nm or less or about 20 nm or less. This permits the emitted color wavelength to be particularly tuned, and for the reader to be set to detect emissions at very specific and close together wavelengths. For example, the different wavelengths emitted by the luminescent marking materials and detected by the reader may differ by, for example, about 20 nm to about 100 nm, such as about 30 nm to about 100 nm. These properties of quantum dots thus permit customization of the security markings described herein.

Even if a different key is used and the image is cracked, the electronic reader from one user can still not read a document encrypted by another user because it will not have the information on the emitted colors. Detection is thus performed by using a reader that is tuned to identify only specific emitted wavelengths.

Although similar results may be achieved through the use of different luminescent organic dyes, with organic dyes only a limited number of emitted wavelengths can be achieved. Change of emitted color with organic luminescent dyes requires change of the organic compound or substitution of the core molecule with appropriate functional groups. This is more difficult to achieve because of the potentially lengthy synthetic route.

As an example of customization, suppose that customer 1 protects their documents or packaging by two color emitting materials each containing quantum dots, one emitting red color (0s) and the other emitting blue color (1s). The detector provided by the document security provider reads only the wavelengths corresponding to the red and blue colors. Customer 2 protects their documents by using two color emitting materials each containing quantum nanoparticles, one emitting red color (0s) and the other emitting green color (1s). Their detector reads only these specified wavelengths. Customer 2 cannot read documents encrypted by customer 1 because their reader will not find one color (green), and similarly customer 1 cannot read documents encrypted by customer 2 because their reader will not read the color blue.

Thus, the advantages in using quantum dots as the luminescent material include high encryption capability, the ability to provide any custom emitted color through simple size adjustment of the quantum dots, the possibility of unlimited customization due to unlimited color combinations, cannot be copied, excellent fatigue resistance, the images are difficult to counterfeit because of the very narrow emitted bands (organic dyes, for example, typically have a wider emission band), and quantum dots have excellent thermal stability and can be printed using existing ink jet or xerographic technology.

As the marking material vehicle, any ink or toner vehicles may be suitably used. For phase change solid inks, the vehicle may be any of those described in U.S. Patent Application No. 11/548,775, U.S. Patent No. 6,906,118 and/or U.S. Patent No. 5,122,187, each incorporated herein by reference in its entirety. The ink vehicle may also be radiation curable, for example any of the ink vehicles described in U.S. Patent Application No. 11/548,774, incorporated herein by reference in its entirety. The ink vehicle may also be any toner polymer binder, for example such as a polyester or a polyacrylate and the like.

The marking materials may also comprise toner, and thus the vehicle may comprise resin of toner particles. When incorporated into a toner, the quantum dots can be included either in the toner particles themselves, or they can be added as external additives to the toner particles. However, more uniform results can be obtained by incorporating the quantum dots into the toner particles.

In this embodiment, the resin vehicle may be any resin used in forming a toner. Examples of suitable toner resins include vinyl polymers such as styrene polymers, acrylonitrile polymers, vinyl ether polymers, acrylate and methacrylate polymers, epoxy polymers, diolefins, polyurethanes, polyamides and polyimides, polyesters such as the polymeric esterification products of a dicarboxylic acid and a diol comprising a diphenol, combinations and mixtures thereof, and the like. The polymer resins selected for the toner may include homopolymers or copolymers of two or more monomers. Furthermore, the above-mentioned polymer resins may also be crosslinked.

Linear unsaturated polyesters that may be selected as the vehicle include, for example, low molecular weight condensation polymers which may be formed by the stepwise reactions between both saturated and unsaturated diacids (or anhydrides) and dihydric alcohols (glycols or diols). Suitable diacids and dianhydrides include, for example, saturated diacids and/or anhydrides, such as for example succinic acid, glutaric acid, adipic acid, pimelic acid, suberic acid, azelaic acid, sebacic acid, isophthalic acid, terephthalic acid, hexachloroendo methylene tetrahydrophthalic acid, phthalic anhydride, chlorendic anhydride, tetrahydrophthalic anhydride, hexahydrophthalic anhydride, endomethylene tetrahydrophthalic anhydride, tetrachlorophthalic anhydride, tetrabromophthalic anhydride, and the like, and mixtures thereof; and unsaturated diacids and/or anhydrides, such as for example maleic acid, fumaric acid, chloromaleic acid, methacrylic acid, acrylic acid, itaconic acid, citraconic acid, mesaconic acid, maleic anhydride, and the like, and mixtures thereof. Suitable diols include, for example, propylene glycol, ethylene glycol, diethylene glycol, neopentyl glycol, dipropylene glycol, dibromoneopentyl glycol, propoxylated bisphenol A, 2,2,4-trimethylpentane-1,3-diol, tetrabromo bisphenol dipropoxy ether, 1,4-butanediol, mixtures thereof and the like.

The polyester base resin may be a poly(propoxylated bisphenol A fumarate). The polyester may be sulfonated.

In embodiments, the toner resin vehicle is one or more of poly(styrene-alkyl acrylate), poly(styrene-1,3-diene), poly(styrene-alkyl methacrylate), poly (styrene-alkyl acrylate-acrylic acid), poly(styrene-1,3-diene-acrylic acid), poly (styrene-alkyl methacrylate-acrylic acid), poly(alkyl methacrylate-alkyl acrylate), poly (alkyl methacrylate-aryl acrylate), poly(aryl methacrylate-alkyl acrylate), poly(alkyl methacrylate-acrylic acid), poly(styrene-alkyl acrylate-acrylonitrile-acrylic acid), poly (styrene-1,3-diene-acrylonitrile-acrylic acid), and poly(alkyl acrylate-acrylonitrile-acrylic acid); poly(styrene-butadiene), poly(methylstyrene-butadiene), poly(methyl methacrylate-butadiene), poly(ethyl methacrylate-butadiene), poly(propyl methacrylate-butadiene), poly(butyl methacrylate-butadiene), poly(methyl acrylate-butadiene), poly(ethyl acrylate-butadiene), poly(propyl acrylate-butadiene), poly(butyl acrylate-butadiene), poly(styrene-isoprene), poly(methylstyrene-isoprene), poly (methyl methacrylate-isoprene), poly(ethyl methacrylate-isoprene), poly(propyl methacrylate-isoprene), poly(butyl methacrylate-isoprene), poly(methyl acrylate-isoprene), poly(ethyl acrylate-isoprene), poly(propyl acrylate-isoprene), poly(butyl acrylate-isoprene); poly(styrene-propyl acrylate), poly(styrene-butyl acrylate), poly (styrene-butadiene-acrylic acid), poly(styrene-butadiene-methacrylic acid), poly (styrene-butadiene-acrylonitrile-acrylic acid), poly(styrene-butyl acrylate-acrylic acid), poly(styrene-butyl acrylate-methacrylic acid), poly(styrene-butyl acrylate-acrylonitrile), poly(styrene-butyl acrylate-acrylonitrile-acrylic acid), poly(styrene-butadiene), poly(styrene-isoprene), poly(styrene-butyl methacrylate), poly(styrene-butyl acrylate-acrylic acid), poly(styrene-butyl methacrylate-acrylic acid), poly(butyl methacrylate-butyl acrylate), poly(butyl methacrylate-acrylic acid), poly(acrylonitrile-butyl acrylate-acrylic acid), and mixtures thereof. A desirable polymer resin vehicle in this regard is poly(styrene/butyl acrylate/beta carboxyl ethyl acrylate).

The toner may also include additional additives and components, for example colorants as discussed above, charge controlling additives, external surface additives such as silica, titanitia zinc oxide, zinc stearate, and the like.

The quantum dot nanoparticles may be dispersed in the vehicle of the marking material by any suitable method. For liquid marking materials, the nanoparticles may be dispersed directly in the liquid vehicle, for example by forming a dispersion of the nanoparticles with suitable surfactant(s). For solid marking materials, including solid inks and toners, the nanoparticles may be mixed with the resin vehicle and/or mixed with any other component of the marking material. For toners, the nanoparticles may be dispersed within the vehicle binder of the toner, contained as an external surface additive on the toner, included with another component of the toner, and the like.

The marking material vehicle may also include a wax such as paraffins, microcrystalline waxes, polyolefin waxes such as polyethylene or polypropylene waxes, ester waxes, fatty acids and other waxy materials, fatty amide containing materials, sulfonamide materials, resinous materials made from different natural sources (tall oil rosins and rosin esters, for example), and synthetic waxes. The wax may be present in an amount of from about 5% to about 25% by weight of the marking material. Examples of suitable waxes include polypropylenes and polyethylenes commercially available from Allied Chemical and Petrolite Corporation, wax emulsions available from Michaelman Inc. and the Daniels Products Company, EPOLENE N-15^{™} commercially available from Eastman Chemical Products, Inc., VISCOL 550-P^{™}, a low weight average molecular weight polypropylene available from Sanyo Kasei K.K., and similar materials. The commercially available polyethylenes selected usually possess a molecular weight of from about 1,000 to about 1,500, while the commercially available polypropylenes utilized for the toner compositions of the present invention are believed to have a molecular weight of from about 4,000 to about 5,000. Examples of suitable functionalized waxes include, for example, amines, amides, imides, esters, quaternary amines, carboxylic acids or acrylic polymer emulsion, for example JONCRYL^{™} 74, 89, 130, 537, and 538, all available from SC Johnson Wax, chlorinated polypropylenes and polyethylenes commercially available from Allied Chemical and Petrolite Corporation and SC Johnson wax.

The system for embedding and recovering the machine readable information on a substrate when using luminescent marking materials comprises an image forming device comprising at least one luminescent marking material, wherein the image forming device receives data representative of the machine readable information, and forms an image corresponding to the data in a machine readable image format with the at least one luminescent marking material on an image receiving substrate, and a document reading device including a radiation emitting unit that emits radiation effecting luminescence of the at least one luminescent marking material, and a reader that detects the data in the image on the mage receiving substrate while the at least one luminescent marking material is illuminating.

In addition, the system may include one or more processors, for example to convert information to the data representative of the information and/or machine readable image format, which data is received by the image forming device, and/or to convert the data detected by the reader to recover the encrypted information.

As the image forming device, an ink jet device, a xerographic device or other device for forming images with a marking material may be used. Suitable methods include, but are not limited to, electrostatic printing processes such as electrophotography and conography, wherein an electrostatic latent image is formed and developed with the luminescent marking material, either dry or liquid; ink jet printing processes, including both continuous stream processes and drop on demand processes (including piezoelectric, thermal or bubble jet, or the like), wherein droplets of an ink containing the luminescent material are jetted in imagewise fashion onto the desired substrate; hot melt ink jet processes, wherein an ink containing the luminescent material is solid at room temperature and liquid at elevated temperatures and wherein the ink is heated to a temperature above its melting point and jetted onto a substrate in an imagewise fashion; conventional printing processes, including lithographic and flexographic processes; and the like.

Printed images of machine readable image may thus be generated with the luminescent marking materials described herein by incorporating the luminescent marking material into an ink jet device, for example a thermal ink jet device, an acoustic ink jet device, a piezoelectric ink jet device and the like, and concurrently causing droplets of molten ink to be ejected in an imagewise pattern forming the image onto an image receiving substrate such as paper, cardboard, transparency material and the like. The ink is typically included in a reservoir connected by any suitable feeding device to the corresponding ejecting channels of an ink jet head. In the jetting procedure, the ink jet head may be heated, by any suitable method, to the jetting temperature of the ink.

In the ink jet device, several embodiments are possible. For example, in embodiments, the ink jet device may be made to jet only luminescent marking materials. For example, a separate ink jet head exclusively for the luminescent inks may be provided. The device may separately include additional print heads for providing images on the substrate with conventional marking inks. In other embodiments, the ink jet head may include separate channels for conventional inks and for the luminescent inks, thereby permitting simultaneous printing of the image and the code.

The luminescent marking material can be applied to any desired substrate. Examples of suitable substrates include (but are not limited to) plain papers such as XEROX® 4024 papers, ruled notebook paper, bond paper, silica coated papers such as Sharp Company silica coated paper, Jujo paper, and the like, transparency materials, fabrics, textile products, plastics, polymeric films, inorganic substrates such as metals and wood, and the like.

It will be appreciated that various of the above-disclosed and other features and functions, or alternatives thereof, may be desirably combined into many other different systems or applications. Also, various presently unforeseen or unanticipated alternatives, modifications, variations or improvements therein may be subsequently made by those skilled in the art, and are also intended to be encompassed by the following claims.

An example is set forth hereinbelow and is illustrative of different compositions and conditions that can be utilized in practicing the disclosure. All proportions are by weight unless otherwise indicated. It will be apparent, however, that the disclosure can be practiced with many types of compositions and can have many different uses in accordance with the disclosure above and as pointed out hereinafter.

### EXAMPLES

Example 1:

***Preparation of latex A*.** An emulsion of quantum dot-containing polymer particles in water is prepared as follows. 80.7 g of XP-777 resin, 53.8 g of XP-777-B2 resin, 15.5 g of Carnauba wax, 0.5 g of "Lake Placid Blue" EviDots CdSe/ZnS core-shell quantum dots (490 nm emission, from Evident Technologies, Inc.) and 0.5 g of "Catskill Green" EviDots CdSe/ZnS core-shell quantum dots (540 nm emission, also from Evident Technologies, Inc.) are dissolved in 1101 g of ethyl acetate at 70C. Separately, 1.9 g of Dowfax 2A-1 solution and 3.0 g of concentrated ammonium hydroxide are dissolved in 850.7 g of deionized water at 70C. The ethyl acetate solution is then poured slowly into the aqueous solution under continuous high-shear homogenization (10,000 rpm, IKA Ultra-Turrax T50). After an additional 30 min of homogenization, the reaction mixture is distilled at 80C for two hours. The resulting emulsion is stirred overnight, strained through a 25-micron sieve, and centrifuged at 3000 rpm for 15 minutes. The supernatant is decanted to yield approximately 590 g of a mostly colorless, strongly blue/green fluorescent latex, with 130-300 nm average particle size and 15-30% solids.

***Preparation of toner.*** 339.0 g of Latex A (described above), 372.0 g of deionized water, and 1.87 g of Dowfax 2A-1 solution are combined in a glass reactor and adjusted to pH 3.3 with 0.3 N nitric acid. The mixture is homogenized (IKA Ultra-Turrax T50, 4000 rpm) while adding a mixture of 2.2 g 10 wt% Al₂(SO₄)₃ and 19.8 g deionized water over one minute. The contents of the reactor are homogenized further for five minutes, and then heated from room temperature to approximately 45C over 30 minutes while stirring at 495 rpm, at which point a particle size of 5 microns is reached. A solution consisting of a further 131.8 g of Latex A and 0.72 g of Dowfax 2A-1 solution is then added to the reactor, the pH re-adjusted to 3.3 with 0.3 N nitric acid, and the stirring rate reduced to 350-450 rpm. The reactor temperature is raised at a rate of 0.1 degrees Celsius per minute over a period of approximately 30 minutes, at which point a particle size of 6 microns is reached. The pH of the solution is then adjusted to 7.5 and the stirring rate reduced to 175-225 rpm. The reactor temperature is then increased to 70C over approximately 40 minutes, and five drops of Dowfax 2A-1 solution are added. The reaction mixture is maintained at 70-75C for three hours, providing toner particles with a particle size of approximately 6 microns.

After cooling to room temperature, the mixture is strained through a 20-micron metal sieve, filtered and dried. The toner is re-suspended in deionized water for 40 minutes, re-filtered, re-suspended in water at 40C and pH 4.0 for 40 minutes, re-filtered, and re-suspended in water a final time. The suspension is filtered and lyophilized, providing mostly colourless, brightly blue-green-fluorescent particles of size approximately 6 microns with size distribution between 1.1-1.4 and and circularity 0.90-0.99. The resulting particles, when examined by fluorescence spectroscopy under suitable activating radiation, show fluorescence in the blue-green range of the electromagnetic spectrum, with luminescence maximum peaks at 490 nm and 540 nm.

## Claims

1. A luminescent marking material comprising:
at least one luminescent material; and
at least one vehicle that delivers the at least one luminescent material to an object,
wherein the at least one luminescent material comprises quantum dots.

2. The luminescent marking material of claim 1, wherein the at least one luminescent material is two or more luminescent materials, wherein emitted or reflected light wavelengths are created by varying the type, number, and concentration of the luminescent materials in the luminescent marking material, and the light wavelength emitted or reflected by each of the two or more luminescent materials is at least machine differentiable from the light wavelength emitted or reflected by the other luminescent materials of the two or more luminescent materials.

3. The luminescent marking material of claim 1, wherein the average size of the quantum dots is from about 2 to about 50 nm.

4. The luminescent marking material of claim 1, wherein the concentration of the quantum dots in the luminescent marking material is from about 0.01 to about 10%.

5. The luminescent marking material of claim 1, wherein the vehicle that delivers the quantum dots to an object comprises material suitable for use in ink jet or bubble jet printing.

6. The luminescent marking material of claim 1, wherein the vehicle that delivers the quantum dots to an object comprises toner suitable for use in electrophotographic imaging.

7. The luminescent marking material of claim 6, wherein the toner is prepared by either conventional or chemical means.

8. The luminescent marking material of claim 6, wherein toner comprises quantum dots imbedded in the toner or contained on the surface of the toner.

9. The luminescent marking material of claim 1, wherein the at least one vehicle for delivering the at least one luminescent material to an object comprises at least one colorant.

10. The luminescent marking material of claim 9, wherein the percentage of the colorant in the vehicle for delivering the at least one luminescent material to an object is from about 1 to about 75 % by weight.

11. The luminescent marking material of claim 9, wherein the at least one vehicle for delivering the luminescent material to an object is from 1 to 4 vehicles for delivering the luminescent material to an object, wherein the 1 to 4 vehicles for delivering the luminescent material to an object comprise:
cyan, magenta, yellow, and black toners or inks or a combination thereof; and
at least one luminescent material.

12. The luminescent marking material of claim 1, wherein the vehicle that delivers the at least one luminescent material to an object comprises no colorant.

13. A method of embedding information on a substrate comprising:
assigning information to at least one luminescent material;
forming at least one luminescent marking material by combining the at least one luminescent material and at least one marking material; and
creating an image on a substrate with the at least one luminescent marking material,
wherein the at least one luminescent material comprises quantum dots.

14. A system for embedding and recovering readable information on a substrate, comprising:
an image forming device containing at least one luminescent marking material, wherein the image forming device receives data representative of the readable information, and forms an image corresponding to the data with the at least one luminescent marking material on an image receiving substrate; and
a document reading device including a radiation emitting unit that emits radiation effecting luminescence of the at least one luminescent marking material, and a reader that detects the data in the image on the image receiving substrate while the at least one luminescent marking material is illuminated,
wherein the at least one luminescent marking material comprises at least one luminescent material; and at least one vehicle that delivers the at least one luminescent material to an object, wherein the at least one luminescent material comprises quantum dots.

15. The system according to claim 14, wherein the machine capable of detecting and differentiating light wavelengths emitted or reflected by the at least one luminescent material is a spectrometer, spectrophotometer, spectrofluorimeter, or a combination thereof.
